Europäisches Patentamt

European Patent Office

Office européen des brevets

(19)

(11) **EP 1 481 956 A1**

(12) **EUROPEAN PATENT APPLICATION**

(43) Date of publication:
**01.12.2004 Bulletin 2004/49**

(51) Int Cl.⁷: **C05F 5/00**, C05D 1/02,
C05D 3/02, C05D 5/00

(21) Application number: **04012461.2**

(22) Date of filing: **26.05.2004**

(84) Designated Contracting States:
**AT BE BG CH CY CZ DE DK EE ES FI FR GB GR
HU IE IT LI LU MC NL PL PT RO SE SI SK TR**
Designated Extension States:
**AL HR LT LV MK**

(30) Priority: **27.05.2003 GB 0312087**

(71) Applicant: **SANDOZ AG**
**4002 Basel (CH)**

(72) Inventors:
• **Fessl, Helmut**
**6250 Kundl (AT)**

• **Hacket, Mary**
**6175 Kematen (AT)**
• **Naschberger, Stefan**
**6314 Oberau (AT)**
• **Andre, Max**
**6215 Achenkirch 608 (AT)**

(74) Representative: **Grubb, Philip William et al**
**Novartis AG,**
**Corporate Intellectual Property**
**4002 Basel (CH)**

(54) **Odourless organic fertiliser**

(57)    The present invention provides a substantially odourless organic fertilizer composition and a process for its production. The composition if the invention comprises a) biomass derived from biotechnological fermentation processes from microorganisms, b) a mineral compound comprising at least one basic magnesium compound, or at least one basic calcium compound, or a mixture thereof, c) potassium magnesium sulphate, d) activated charcoal, and optionally e) an organic component having odour-reducting activity and optionally fertilising properties.

**EP 1 481 956 A1**

Printed by Jouve, 75001 PARIS (FR)

**Description**

This invention relates to fertiliser products.

Organic or natural fertiliser products are typically produced without synthetic plant growth promoting agents. Examples of organic fertilisers include those which are produced from biomass, this biomass being derived from biotechnological fermentation processes involving microorganisms.

Compositions known and available under the trademark BIOSOL® are produced from fungal biomass and contain a rich blend of natural plant nutrients, and thus promote growth in plants by increasing the humus content of soil, stimulating the development of fine roots and by activating soil microorganisms. In addition, the compositions available under the trademark BIOSOL induce resistance of plants against phytopathogenic microorganisms.

Published European patent application EP 0949866 discloses plant immunisation compositions.

Despite the benefits of organic fertiliser products, for example BIOSOL organic fertiliser, a disadvantage is an intensive and persistent product-specific odour, often perceived as unpleasant odour or malodour. This malodour tends to discourage a more widespread use of such fertilisers in domestic, household and leisure environments, for example in the home, on balconies, in gardens, on golf courses, parks and sports facilities.

Natural aromas have been mixed with odorous fertilisers such as BIOSOL, in an attempt to reduce or neutralise the malodour. However, it has been found that the unpleasant odour returns within a short period, e.g. 1 or 2 days, after application. This is believed to be caused by metabolisation by soil microorganisms and/or dissipation of the aroma into the surrounding soil. Thus aroma products have been found to provide at best short-term relief from the malodour, and, in some cases, to produce an undesirably high pH within the fertiliser product.

The present applicants have sought to overcome the problem of malodour associated with fertiliser products.

In one aspect, therefore, this invention provides a substantially odourless fertiliser which comprises:

a) biomass derived from biotechnological fermentation processes from microorganisms,
b) a mineral component comprising at least one basic magnesium compound, or at least one basic calcium compound, or a mixture thereof,
c) potassium magnesium sulphate, and
d) activated charcoal.

In another aspect of the invention, the substantially odourless fertiliser further comprises an organic component (e) having odour-reducing activity and optionally fertilising properties.

This new and improved composition causes a substantially complete elimination of the malodour thus leaving a neutral odour, without any loss of efficacy of the fertiliser product and having an acceptable pH for plant growth.

In another aspect, this invention provides a process for the production of the odourless fertiliser product which comprises the steps of

(i) mixing components a) to d), and optionally e), and subsequently
(ii) pelletising by extrusion and thereafter crumbling the mixture obtained in step (i); or alternatively
(iii) granulating the mixture obtained in step (i), and subsequently
(iv) sieving the product obtained in step (ii) or (iii),

wherein the pelletisation process (ii) or the granulation process (iii) takes place in the presence of a solvent medium.

"Substantially odourless" is understood to mean that normal average persons in contact with the fertiliser of the invention when dry or in use will not detect malodour thereof, and will generally judge the odour as neutral according to the measurement of hedonic quality of the fertiliser as described below.

As used herein, the term "biomass" (component a) is understood to mean organic by-products that are obtained in a biotechnological fermentation process, e.g. in the production of pharmaceuticals such as antibiotics. Proteins, syrups, sugar, trace elements and vitamins are converted into microbiological biomass during the process of fermentation. At the time of harvesting, wet microbiological biomass is separated from liquid present, e.g. the antibiotic containing phase, washed and dried. This dried biomass can now serve as starting material, i.e. component a), to produce the compositions of the invention.
The starting materials for the process of fermentation may also comprise cottonseed meal, soybean meal, wheat starch, vegetable oils and trace elements.

Optionally, biomass (component a) with a water content of up to 80% may be used as starting material. Alternatively, the biomass may be concentrated, e.g. by means of ultra filtration, optionally mixed with 1 to 4 % w/w calcium hydroxide, thereafter mixed with biomass derived from one or more other microorganisms and dried.

Examples of genera and species of microorganisms which can be used for the production of the biomass include those listed in EP 0949866B, page 3 line 36 to page 4 line 32, the contents of which are incorporated by reference, and which particularly include the following genera of fungi: *Acremonium spp.*, *Aspergillus spp.*, *Aureobasidium spp.*, *Beauveria spp.*, *Clitopilus spp.*, *Mucor spp., Neocosmospera spp., Phaecilomyces spp.*, *Penicillium spp.*, *Phanerochaete spp.*, *Pullularia spp.*, *Schizosaccharomyces spp.*, *Tolypocladium spp., Trametes spp., Trichoderma spp..* Another example from *Penicillium spp.* is *Penicillium brevicompactum.*

The biomass (component a) comprises preferably fungal biomass (mycelia), preferably derived from the biotechnological fermentation of *Penicillium spp.* or *Acremonium spp..*

In a preferred embodiment, the biomass is derived from the fermentation of *Penicillium chrysogenum* or *Acremonium chrysogenum,* especially *Penicillium chrysogenum.*

Alternatively, the biomass (component a) may comprise a mixture of the biomass of more than one microorganism, e.g. of 2 fungi, e.g. a mixture of mycelia derived from *Penicillium chrysogenum* and *Acremonium chrysogenum,* wherein the 2 mycelia may be mixed in a ratio of 30 - 70 : 70 - 30 (related to weight of dry mycelium) preferably before or during the drying step mentioned above.

In one embodiment, where the composition of the invention lacks component e), the composition may comprise 72 to 90% w/w dry weight of fungal biomass, e.g. 77 - 85% w/w, for example 80 % w/w, wherein the respective weights are based on the total weight of the composition.

When the composition of the invention further comprises an organic component (e) having odour-reducing activity and optionally fertilising properties, the composition of the invention may comprise 32 - 90 % w/w dry weight of fungal biomass, e.g. 44 - 60 % w/w, for example 55.5 % w/w, wherein the respective weights are based on the total weight of the composition.

When the composition of the invention comprises vegetable oil, e.g. rape oil, as organic component e), the composition of the invention may comprise 62 - 89 % w/w dry weight of fungal biomass, e.g. 70% w/w, wherein the respective weights are based on the total weight of the composition.

The mineral component (component b) comprising a least one basic magnesium compound, or one basic calcium compound, or a mixture thereof, may preferably comprise calcium carbonate, magnesium carbonate, calcium oxide or magnesium oxide, or a mixture thereof. As used herein, "basic compounds" are understood to mean compounds which have a pH of more than 7 in aqueous solution.

The mineral component (component b) may preferably comprise lime or limestone. Component b) may preferably comprise dolomitic limestone, blast furnace lime, chalk, dolomite, magnesite, magnesium oxide or a mixture thereof. Alternatively, the mineral compound may be rock meal.

The mineral component b) may be derived from natural sources or from chemical synthesis.

Lime or limestone, or dolomitic limestone, may be derived from natural sources having variable compositions, e.g. from crushed rocks, and preferably comprise substantial proportions of a calcium compound, e.g. of calcium carbonate.

"Substantial" proportions of a calcium compound are understood to mean preferably more than 30%, e.g. more than 40%, e.g. more than 50%, e.g. more than 60%, e.g. more than 70%, e.g. more than 80%, or e.g. up to 90% by weight. Crushed dolomitic limestone rich in calcium carbonate is commercially available e.g. from Plattner & Co, Zirl/Tirol, Austria.

Blast furnace lime may be derived from crushed blast-furnace slag and may comprise calcium and magnesium oxides, silicon oxide, aluminium oxide and trace elements.

Dolomite is understood to mean calcium magnesium carbonate and may be derived e.g. from crushed dolomite rocks.

As used herein, "magnesite" is understood to mean a mixture comprising magnesium carbonate and calcium carbonate, which may be derived from natural sources having variable compositions, for example from crushed "raw magnesite" rock, or from dolomite, e.g. from Hochfilzen/Tyrol, Austria, such as commercially available from Veitsch-Radex GmbH/Tyrol, Austria.

Magnesium oxide (MgO) may be sourced from naturally occurring, i.e. non-synthetic, magnesium compounds, e.g. from magnesite.

Rock meal may be derived from natural sources such as from magmatic rocks, and may usually comprise silicon, calcium and magnesium compounds, aluminium oxide, other minerals and trace elements. Preferably, rock meal comprises calcium compounds, e.g. calcium oxide or calcium silicates.

In one embodiment, the composition of the invention may comprise 5 - 20 % w/w, e.g. 10-15 % w/w, for example 10% w/w, of the mineral component b), the respective weights being based on the total weight of the composition.

In another specific embodiment, the composition of the invention may comprise 5 -15 % w/w, e.g. 7 -13% w/w, for example 10% w/w, of a mixture of magnesite and magnesium oxide, the respective weights being based on the total weight of the composition, wherein the ratio of magnesite to magnesium oxide may be 40 : 60 to 60 : 40, e.g. 45 : 55 to 55 : 45, for example 50 : 50, by weight.

Alternatively, the composition of the invention may comprise 5 -15% w/w, e.g. 7 - 13 % w/w, for example 10% w/w, magnesite without additional MgO, wherein the respective weights are based on the total weight of the composition.

Potassium magnesium sulphate (component c) may be derived from a natural or synthetic source, and may comprise at least 25% w/w potassium oxide ($K_2O$) and at least 8% w/w MgO. A commercially available potassium magnesium sulphate is known under the trademark Patentkali.

The compositions of the invention may comprise 2 - 5 % w/w, for example 3% w/w, potassium magnesium sulphate (component c), wherein the respective weights are based on the total weight of the composition.

As herein used, the term "activated charcoal" (component d) is understood to mean porous carbon structures comprising small graphite crystals and amorphous carbon, and having internal surfaces between 500 and 1500 $m^2$ per g. Activated charcoal may be produced by carbonization of vegetable, animal or mineral raw material by dry distillation and subsequent oxidative activation, i.e. by treating the carbonized material at 700 to 1000 °C with water steam, carbon dioxide or a mixture thereof, or with air.

Activated charcoal may be e.g. powdered activated charcoal as commercially available under the trademarks NORIT W 20 by Norit Nederland B.V. Netherlands, or Acticarbone S by Ceca/Atofina, France.

Activated charcoal may be derived from natural, i.e. non-synthetic sources.

The composition of the invention may comprise 0.5 - 3% w/w, for example 1.5% w/w, activated charcoal (component c), wherein the respective weights are based on the total weight of the composition.

The applicants have found that the amount of component c) in the composition of the invention should be ideally limited to the range indicated above, in order to avoid undesirable soiling of a potential user's hands when handling the fertiliser product. Despite this low percentage of charcoal, the composition of the invention is odourless due to the combined effects of components b) to d), and optionally e).

The organic component (e) may comprise by-products from the production of vegetable oil, for example rape cake, castor cake, crushed soybeans or pumpkin seeds. As used herein, "fertilising properties" are understood to mean promoting plant growth.

Where present, the amount of the organic component (e) in the composition of the invention may be 15 - 45% w/w; e.g. 20 - 35% w/w, for example 30% w/w, wherein the respective weights are based on the total weight of the composition.

In one embodiment, the organic component (e) is rape cake, i.e. commercially available residual products made from crushed rape seed.

Optionally, the organic component (e), e.g. rape cake, is free of or substantially free of genetically modified organisms.

The applicants have found that the content of rape cake in the composition should preferably be less than 50% w/w (related to the total weight of the composition) in order to avoid instability of the compositions of the invention during the pelletisation or granulation process, and to avoid dilution of the fertilising properties of the composition.

Alternatively, the organic component (e) may comprise a vegetable oil, for example rape oil, or a mixture of the above mentioned by-products from the production of vegetable oil and said oil, e.g. rape oil.

The amount of the vegetable oil, e.g. rape oil, may be 3 - 10% w/w, e.g. 5 - 8% w/w, for example 5% w/w, wherein the respective weights are based on the total weight of the composition.

Embodiments of the invention are described below, wherein the respective weights are based on the total weight of the corresponding compositions.

A preferred embodiment of the invention is a composition comprising, preferably consisting of:

- dried fungal biomass (mycelia): 72 - 90 % w/w,
- lime, or limestone, or dolomitic limestone: 5 - 20 % w/w,
- potassium magnesium sulphate: 2 - 5 % w/w, and
- activated charcoal: 0.5 - 3% w/w.

Another preferred embodiment of the invention is a composition comprising, preferably consisting of:

- dried fungal biomass (mycelia): 77 - 85 % w/w,
- lime, or limestone, or dolomitic limestone: 10 -15 % w/w,
- potassium magnesium sulphate: 2 - 5 % w/w, and
- activated charcoal: 0.5 - 3% w/w.

Alternatively, lime, or limestone, or dolomitic limestone may be substituted by blast furnace lime, chalk, dolomite or rock meal.

Another embodiment of the invention is a composition comprising, preferably consisting of:

- dried fungal biomass (mycelia): 77 - 90 % w/w,
- magnesite, or a mixture of magnesite and magnesium oxide: 5 - 15 % w/w,
- potassium magnesium sulphate: 2 - 5 % w/w, and
- activated charcoal: 0.5 - 3% w/w.

A further embodiment is a composition comprising, preferably consisting of:

- dried fungal biomass (mycelia): 32 - 70 % w/w,
- lime, or limestone, or dolomitic limestone, or blast furnace lime, or chalk, or dolomite, or rock meal, or magnesite, or a mixture of magnesite and magnesium oxide: 5 - 15 % w/w,
- potassium magnesium sulphate: 2 - 5 % w/w, and
- activated charcoal: 0.5 - 3% w/w, and
- rape cake: 15 - 45 % w/w.

Still another embodiment is a composition comprising, preferably consisting of:

- dried fungal biomass (mycelia): 44 - 60 % w/w,
- lime, or limestone, or dolomitic limestone, or blast furnace lime, or chalk, or dolomite, or rock meal, or magnesite, or a mixture of magnesite and magnesium oxide: 7 - 13 % w/w,
- potassium magnesium sulphate: 2 - 5 % w/w, and
- activated charcoal: 0.5 - 3% w/w, and
- rape cake: 20 - 35 % w/w.

The mixture of magnesite and magnesium oxide as used in the above mentioned embodiments may have a ratio of magnesite to magnesium oxide as described herein.
Alternatively, the composition of the invention comprises, preferably consists of:

- dried fungal biomass (mycelia): 62 - 89 % w/w,
- rape oil: 3 - 10% w/w,
- lime, or limestone, or dolomitic limestone: 5 - 20 % w/w,
- potassium magnesium sulphate: 2 - 5 % w/w, and
- activated charcoal: 0.5 - 3% w/w.

In the composition comprising rape oil, optionally lime, or limestone, or dolomitic limestone may be substituted by dolomite, blast furnace lime, chalk or rock meal, or by magnesite or a mixture of magnesite and magnesium oxide as herein described. When magnesite or a mixture of magnesite and magnesium oxide are used, the range should be from 5 - 15% w/w.
The components a) to d), and optionally e) processed as described herein achieve a substantial reduction of the unpleasant odour of the fertiliser product as compared, for example, to hitherto known organic fertiliser compositions comprising biomass such as BIOSOL. Without wishing to be bound by any particular mechanism or theory, the applicants consider that the odour-reducing effect as achieved by the invention may be due to the combined effects of the individual components.
Addition of the mineral component (component b) leads to a favourable increase of the pH of the fertilizer, which suppresses the malodourant effect of strong-smelling compounds of the biomass. This pH-increasing effect is especially well exhibited by the mixture of magnesite and magnesium oxide (pH increase to 6 - 8), which additionally causes a mildly exothermic reaction during the process of pelletisation, which neutralises part of the particularly strong-smelling compounds or expels them.
The addition of lime, limestone, dolomitic limestone, blast furnace lime, chalk, dolomite, magnesite, or rock meal, the latter preferably rich in calcium, may also increase the pH of the fertiliser so as to effectively exhibit a pronounced suppression of malodour. The applicants believe that this odour-reducing effect may be due to the conversion of free volatile fatty acids into their non-volatile salts.
Admixture of the mineral component (component b) may ideally enrich the content of calcium and magnesium in the composition of the invention, and contribute to the fertilising properties thereof.
Inclusion of potassium magnesium sulphate (component c), for example from a natural source, is desirable for balancing the ratio of potassium- to nitrogen-containing components in the fertiliser. The ratio of potassium (as $K_2O$) to nitrogen may be 1 : 3.
Activated charcoal (component d) has a particularly favourable odour-binding effect due to its large surface area. Too high amounts of charcoal, however, lead to an undesirable soiling of the hands of potential users of the fertiliser product. The combination of component d) with components a) to c), and optionally e), allow to apply relatively low amounts of component d) with still sufficient odour-reducing efficacy, but avoiding the hand-soiling effect.

The addition of rape cake (component e) to some embodiments of the invention improves the odour of the composition. Rape cake is perceived to have a pleasant odour which masks the malodour. It is believed that rape cake may bind the malodour by residual oil content. As a further benefit, rape cake, or other residual products from vegetable oil production, have fertilising properties of their own, thus enhancing the fertilising activity of the biomass.

The pH of the composition of the invention may be measured after mixing a sample of 10 g of the composition with 100 ml of a 0.01 mol solution of $CaCl_2$ and stirring by a magnetic stirrer for 1 hour, according to the Austrian Regulation on Compost, BGBIII 2001/292.

In a process for the production of the odourless organic fertiliser product, the components a) to d), and optionally e), may be mixed, and subsequently pelletised, crumbled and sieved, using a pelletisation process based on extrusion as used conventionally in the food and pharmaceutical industries. Alternatively, a conventional granulation process may be used.

The pelletisation or granulation process may take place in the presence of a solvent medium.

The solvent medium may be organic and may comprise for example an alcohol, e.g. ethanol or isopropanol, or vegetable oil, e.g. rape seed oil.

The solvent medium may be aqueous, e.g. water, for example in the form of steam and 1 - 2 % water by weight (related to the mixture obtained in step (i) of the pelletisation or granulation process as described above).

The particle size of the herein described odourless fertiliser may be any convenient size, for example 1 - 4 mm, e.g. 1.5 mm. Alternatively, the particle size may be 1 - 6 mm.

The composition may further comprise an aroma substance.

As used herein, the term "conventional composition of BIOSOL fertiliser" is understood to mean a product obtained by the following procedure: proteins, syrups, sugar, trace elements and vitamins are converted to fungal biomass by means of fermentation of *Penicillium chrysogenum* that takes several days. At the time of harvesting, wet fungal biomass is separated from liquid present, e.g. the penicillin containing phase, washed and dried, e.g. at 110°C to 120°C with an exposure time of several hours, e.g. 3 to 4 hours. After admixture of 3% w/w potassium magnesium sulphate, the composition is granulated to give a readily applicable product.

Reduction of the malodour of the composition of the invention can be detected by olfactometry, which is the controlled presentation of odourants and the recordal of the resulting sensations from a panel of test persons, or alternatively by a comparative odour testing.

In the Examples, the comparative odour testing is carried out by 6 to 7 test persons who individually sniff each sample, preferably only 3 samples in one test, and then evaluate the relative odour of each sample according to the following scoring scheme: 1 = "smelling best", i.e. with the least malodour sensitised and/or neutral odour, 2 = "smelling second best", i.e. with some malodour, and 3 = "smelling worst", i.e. exhibiting the most expressed malodour. Each sample is evaluated once by each test person. To weigh the rankings given by each test person for one sample, 1 is defined as a "+", 2 as a "0", and 3 as a "-". For each sample then, these values are summed up to give a final value which means "smelling good" if the value is positive, and "smelling bad", if the value is negative.

For some samples, the comparative odour testing is performed in a more simplified version. This so-called direct comparative odour testing engages 6 - 7 test persons to sniff 2 samples and to evaluate them in a direct comparison, i.e. give the sample a "+" or a "0", which is interpreted to mean that a sample with a "+" smells less unpleasant than the sample with a "0".

In the above mentioned comparative odour testing the samples of the herein described fertiliser compositions may be tested under dry or wet conditions. Dry conditions are understood to mean that said compositions are weighed into a glass beaker and are sniffed therein. Wet conditions mean that water is added to the samples in the glass beaker, which are subsequently covered, e.g. with an aluminium foil, and kept for 3 days at about room temperature, and then are subsequently sniffed and evaluated by the test persons.

Olfactometric measurements may be carried out according to the German VDI-guidelines 3881ff and 3882 ff, as well as prEN13725. A suitable olfactometer is a Mannebeck TO6-SIH with dynamic dilution of the odorous air with neutral air, i.e. a metered odorous gas flow is mixed with a constant neutral air flow. This mixture is presented via a nose mask to panelists who evaluate the odourant concentration by indicating their odour impressions ("yes, it smells") of a diluted sample when a threshold concentration is reached. The odorous sample is diluted with neutral air down to the perceived odour threshold. The odorant concentration ($C_{od}$) is calculated in odour units per m³ (OU/m³) as a multiple of the odour threshold concentration. The odour threshold concentration is the odourant concentration which leads to an odour impression with 50% of the panelists, and which is per definition 1 OU/m³.

In addition, the panelists may assess the odour level which describes the intensity of the sensation. The odour level ($L_{od}$) is calculated as the logarithm of the ratio of two odourant concentrations whereof the denominator is the odourant threshold concentration, i.e. 1 OU/m³, as follows:

$$L_{od} = 10 \times \log C_{od} \text{ [in dB}_{od}\text{]}$$

Panelists may judge in addition the hedonic quality of the odorous sample thus assessing the potential odour nuisance by using a 9-step scale from "extremely pleasant" to "extremely unpleasant". In addition, panelists characterise the odour quality of the odourous sample by commenting on what known odours resemble the sample.

The panel normally consists of at least 4 panelists of an age between 18 and 50 years and having a "normal" sense of smell.

Odorous samples may be taken using standard vacuum sampling devices and odourless plastic bags with a volume of about 20 l.

Following is a description by way of example only of compositions of the invention.

### Example 1:

#### 1a) Preparation of a first composition of odourless organic fertiliser

55.5 kg of dried fungal biomass (mycelia) from *Penicillium chrysogenum* which is derived from the biotechnological fermentation of penicillin, are mixed with 30 kg rape cake, 10 kg 50 : 50 mixture of magnesite and magnesium oxide (i.e. 5 kg magnesite and 5 kg magnesium oxide), 3 kg potassium magnesium sulphate and with 1.5 kg powdered activated charcoal. The mixture of these components is pressed to pellets in the presence of steam and 1 - 2 % water by weight, at a temperature of about 70°C within the mixture. These pellets are subsequently cooled to room temperature, crumbled and sieved to finally give a readily applicable product with a particle size of 1 - 2 mm.

The fungal biomass is prepared as described herein and dried at 110 - 120°C with an exposure time of 3 to 4 hours.

The rape cake contains approximately 93 % organic substance and 5.6 % total nitrogen as related to dry substance weight.

The magnesite is "raw magnesite", derived from crushed dolomite, magnesian limestone, from Hochfilzen/Tyrol, Austria, commercially available from Veitsch-Radex GmbH/Tyrol, Austria, under the trademark BIOMAG-M0. This dolomite, magnesium limestone comprises about 73 - 79% w/w magnesium carbonate (corresponding to about 35 - 38% w/w MgO), about 16% w/w calcium carbonate (corresponding to about 9% w/w CaO), 2% w/w $Fe_2O_3$, 0.3% w/w $SiO_2$, and 0.4% w/w $MnO+Al_2O_3$.

Magnesium oxide is derived from a natural source and contains about 86% w/w MgO, about 6 % w/w $Fe_2O_3$, 3% w/w CaO and about 0.4% w/w of $SiO_2$ and $Al_2O_3$.

Potassium magnesium sulphate is derived from a natural source, namely as available under the trademark Patentkali "fine", by K+S Kali GmbH/Germany, which contains about 59% w/w $K_2SO_4$, about 33% w/w $MgSO_4$, 1.9 % w/w other sulphates (e.g. $CaSO_4$), 0.7 % w/w chlorides (KCl, NaCl) and up to 3% w/w Cl.

Powdered activated charcoal is derived from a natural source, commercially available under the trademark NORIT W 20 which is produced by steam activation of dedicated vegetable raw materials and meets the requirements of the US Food Chemicals Codex (4th edition, 1996). The specifications of this activated charcoal product are an iodine number of at least 450, and moisture (as packed) of maximally 5 mass-percent.

#### 1b) Results of reduction of malodour in the composition of the invention compared to a conventional composition of BIOSOL fertiliser

Olfactometric measurements are carried out as described above.

#### I. Results from measurement of odourant concentrations and odour level:

The composition from Example 1a) provides a 96% reduction in odourant concentration, as shown in Table 1. The reduction in the odourant concentration is additionally reflected by a considerably lower odour level of the invention, which is interpreted to mean that the composition of the invention contains a lower amount of stimulating quantity of odourants thus leading to a lower sensation intensity with the panelists.

The odorous samples as herein described contain several odourants with their large variety of chemical and physical properties; among those, volatile carbonic acids and mercaptans are believed to be the malodourant components.

Table 1:

| Olfactory measurement of organic fertilisers I. Odourant Concentration and Odour Level | | | | | |
|---|---|---|---|---|---|
| Sample no | Composition | Odourant concentration (OU/m$^3$) | Upper Limit (OU/m$^3$) | Lower Limit (OU/m$^3$) | Odour Level (dB$_{od}$) |
| 1 | invention/1a) | 171 | 147 | 199 | 22.3 |
| 2 | invention/1a) | 181 | 160 | 204 | 22.6 |
| 3 | invention/1a) | 197 | 171 | 228 | 23 |
| | | | | | |
| Average value | invention/1a) | 183 | | | 22.6 |
| 4 | BIOSOL** | 4732 | 3843 | 5827 | 36.8 |
| 5 | BIOSOL** | 5161 | 4255 | 6259 | 37.1 |
| 6 | BIOSOL** | 5628 | 4996 | 6339 | 37.5 |
| | | | | | |
| Average value | BIOSOL** | 5174 | | | 37.1 |
| | | | | | |
| Reduction of odour | | 96% | | | |

** conventional composition of BIOSOL fertiliser     OU = odour units

20 g of sample material from Example 1a) or of the BIOSOL fertiliser are filled into bags together with 25 l of neutral air and stored at 20°C for 1 hour, before being transferred to the olfactometer, where human olfactory responses of 4 panelists are measured. Control measurements are carried out with n-butanol as reference gas with a known concentration and odourant concentration, showing a normal spread of the olfactory measurement results.
Each sample is measured 3 times being thus assessed each time by the 4 panelists. Thus 12 measurements are obtained per sample, the result of which is calculated as a statistical average value according to prEN 13725. Calculation of the olfactometric parameters is carried out automatically by the olfactometer.

**II. Results from measurement of hedonic quality:**

Composition 1a) is rated by the panelists as having a more pleasant odour compared to the conventional composition of BIOSOL fertiliser. The odour of composition 1 a) is assessed as neutral, i.e. rated between 4 and 6 on the hedonic scoring scheme, as shown in Table 2.
In addition, the panelists characterise the odour quality of composition 1a) and of BIOSOL fertiliser as listed under comments in Tab. 2.

Table 2:

| Olfactory measurement of organic fertilisers II. Hedonic Quality | | | |
|---|---|---|---|
| **Sample no** | **Composition** | **Hedonic Quality** | **Comments** |
| 1 | invention/1a) | 6 | animal feed, moist cereals, |
| 2 | invention/1a) | 6 | moist cardboard, fresh biological |
| 3 | invention/1a) | 6 | waste, soil, wet hay, peanuts |
| | | | |
| **Average value** | **invention/1a)** | **6** | |
| | | | |
| 4 | BIOSOL** | 8 | burnt food, pungent, |
| 5 | BIOSOL** | 8 | rancid, biological waste, |
| 6 | BIOSOL** | 8 | rotten eggs |
| | | | |
| **Average value** | **BIOSOL**** | **8** | |
| Scoring scheme for hedonic quality | | | |
| 1 extremely pleasant | | 5 neither + nor − | 9 extremely unpleasant |
| 2 +++ | | 6 - | |
| 3 ++ | | 7 -- | |
| 4 + | | 8 --- | |
| ** conventional composition of BIOSOL fertiliser | | | |

**Example 2:**

**Preparation of second composition of odourless organic fertiliser**

The composition of Example 2) is prepared in analoguous manner to that of Example 1a), wherein the mixture contains the following components:

> 55.5 kg dried fungal biomass (mycelia) from *Penicillium chrysogenum* which is derived from the biotechnological fermentation of penicillin,
> 30 kg rape cake free of genetically modified organisms,
> 10 kg magnesite,
> 3 kg potassium magnesium sulphate, and
> 1.5 kg powdered activated charcoal.

## Example 3:

### Preparation of another composition of odourless organic fertiliser

The composition of Example 3) is obtained as described for Example 1a), but the magnesite used in Example 3) is "raw magnesite", derived from crushed magnesite stone, from Hochfilzen/Tyrol, Austria, commercially available from Veitsch-Radex GmbH/Tyrol, Austria, under the trademark BIOMAG-M0. This crushed magnesite stone comprises about 73 - 79% w/w magnesium carbonate (corresponding to about 35 - 38% w/w MgO), about 16% w/w calcium carbonate (corresponding to about 9% w/w CaO), 2% w/w $Fe_2O_3$, 0.3% w/w $SiO_2$, and 0.4% w/w $MnO+Al_2O_3$.

Olfactometric measurements are carried under the same conditions as described in Example 1b) for the composition of Example 3) compared to a conventional composition of BIOSOL fertiliser.

### I. Results from measurement of odourant concentrations and odour level:

The composition from Example 3) provides a 94% reduction in odourant concentration, as shown in Table 3.

Table 3:

| Olfactory measurement of organic fertilisers I. Odourant Concentration and Odour Level | | | | | |
|---|---|---|---|---|---|
| Sample no | Composition | Odourant concentration (OU/m$^3$) | Upper Limit (OU/m$^3$) | Lower Limit (OU/m$^3$) | Odour Level (dB$_{od}$) |
| 1 | invention/3) | 243 | 213 | 280 | 24.0 |
| 2 | invention/3) | 256 | 219 | 299 | 24.1 |
| | | | | | |
| Average value | invention/3) | 250 | | | 24.0 |
| | | | | | |
| 4 | BIOSOL** | 4598 | 3835 | 5427 | 36.6 |
| 5 | BIOSOL** | 4216 | 3743 | 4749 | 36.2 |
| | | | | | |
| Average value | BIOSOL** | 4407 | | | 36.4 |
| | | | | | |
| Reduction of odour | | 94% | | | |

** conventional composition of BIOSOL fertiliser       OU = odour units

### II. Results from measurement of hedonic quality:

The results from the measurement of the hedonic quality of composition from Example 3) as compared to the conventional composition of BIOSOL are similar to those seen in Table 2 of Example 1b).
This means that the composition of Example 3), i.e. invention/3), is rated by the panelists as having a more pleasant odour compared to the conventional composition of BIOSOL fertiliser. The odour of composition of Example 3) is assessed as neutral, i.e. rated between 4 and 6 on the hedonic scoring scheme, and the panelists characterise the odour quality of invention 3) and of BIOSOL fertiliser as listed under comments in Table 2.

## Example 4:

### Preparation of a composition of odourless organic fertiliser comprising rock meal:

The composition of Example 4) is prepared in analogous manner to that of Example 1a), wherein the mixture contains the following components:

85.5 kg dried fungal biomass (mycelia) from *Penicillium chrysogenum* which is derived from the biotechnological fermentation of penicillin,
10 kg dolomitic limestone,
3 kg potassium magnesium sulphate, and
1.5 kg powdered activated charcoal.

Dolomitic limestone comprises about 80 - 90% calcium carbonate and about 12 - 18 % of dolomite, and is commercially available under the trademark Zirler Düngekalk, by Plattner & Co., Zirl/Tirol, Austria.

The composition of Example 4) is evaluated by the comparative odour testing under dry conditions as herein described in comparison to the conventional composition of Biosol and to the composition of Example 2).

The results as in Table 4 show that the composition of Example 4) smells best relative to the composition of Example 2), and the conventional composition of BIOSOL. The presence of dolomitic limestone seems to be a decisive factor in reducing the odour of the tested compositions.

Table 4:

| Comparative odour testing | | | | | | | | |
|---|---|---|---|---|---|---|---|---|
| **Single Odour Evaluation of Test Persons T1 - T7** | | | | | | | | |
| **Sample** | **T1** | **T2** | **T3** | **T4** | **T5** | **T6** | **T7** | **Final Value** |
| invention/4) | **2** | **1** | **1** | **1** | **1** | **2** | **2** | **4+** |
| invention/2) | **1** | **2** | **2** | **2** | **2** | **1** | **1** | **3+** |
| BIOSOL** | **3** | **3** | **3** | **3** | **3** | **3** | **3** | **6-** |

** conventional composition of BIOSOL fertiliser

Scoring scheme: 1 = "smelling best", i.e. with the least malodour sensitised and/or neutral odour, 2 = "smelling second best", i.e. with some malodour, and 3 = "smelling worst", i.e. exhibiting the most expressed malodour.

Each sample is evaluated once by each test person. To weigh the rankings given by each test person for one sample, 1 is defined as a "+", 2 as a "0", and 3 as a "-". These values are summed up to give the final value as herein described.

Test conditions:

120 g of each sample are weighed into a glass beaker with a volume of 600 ml, and are then sniffed and evaluated by 7 test persons as herein described.

**Example 5:**

**Preparation of a compositions of odourless organic fertiliser comprising a mixture of biomass derived from *Penicillium chrysogenum* and *Acremonium chrysogenum*:**

Wet mycelium of *Acremonium chrysogenum* derived from the fermentation of cephalosporins is harvested by separation from the liquid present, e.g. the antibiotic containing phase, washed, further concentrated by means of ultra filtration, mixed with 2.5% w/w calcium hydroxide, subsequently mixed with dry mycelium derived from *Penicillium chrysogenum* prepared as described in Example 1a) and dried. The ratio of mycelium of *Acremonium chrysogenum* and *Penicillium chrysogenum* is 30 : 70 by weight.

Composition A of Example 5) is prepared in analogous manner to that of Example 4), wherein the mixture contains the following components:

85.5 kg dried fungal biomass (mycelia) mixture obtained as described above,
10 kg dolomitic limestone,
3 kg potassium magnesium sulphate, and
1.5 kg powdered activated charcoal.

Composition B of Example 5) is prepared in analogous manner to that of Example 1a), wherein the mixture contains the following components:

55.5 kg dried fungal biomass (mycelia) mixture obtained as described above,
30 kg of rape cake,
10 kg magnesite,
3 kg potassium magnesium sulphate, and
1.5 kg powdered activated charcoal.

Composition A and B are tested by the direct comparative odour testing as herein described, the results are shown in Table 5 (dry conditions) and Table 6 (wet conditions) below.
Composition A exhibits less (mal) odour than composition B; this is even more expressed under wet conditions.
As also observed in Example 4), the presence of dolomitic limestone seems to be critical for reduction of odour.

Table 5:

| Direct comparative odour testing under dry conditions: | | | | | | | |
|---|---|---|---|---|---|---|---|
| **Single Odour Evaluation of Test Persons T1 - T7** | | | | | | | |
| **Sample** | **T1** | **T2** | **T3** | **T4** | **T5** | **T6** | **T7** |
| composition A | **+** | | | **+** | **+** | **+** | **+** |
| composition B | | **+** | **+** | | | | |

Table 6:

| Direct comparative odour testing under wet conditions: | | | | | | | |
|---|---|---|---|---|---|---|---|
| **Single Odour Evaluation of Test Persons T1 - T7** | | | | | | | |
| **Sample** | **T1** | **T2** | **T3** | **T4** | **T5** | **T6** | **T7** |
| composition A | **+** | **+** | **+** | **+** | **+** | **+** | **+** |
| composition B | | | | | | | |

6 - 7 test persons sniff and evaluate 2 samples in a direct comparison as herein described, i.e. give the sample a "+" or a "0", which is interpreted to mean that a sample with a "+" smells less unpleasant than the sample with a "0".

Test conditions for dry samples: are as described in Example 4)

Test conditions for wet samples:

120 g of each sample are weighed into a glass beaker with a volume of 600 ml, after the addition of 100 ml water, the glass beaker are closed and are kept at room temperature for 3 days. Subsequently the samples are evaluated by 7 test persons as herein described.
The compositions of the invention when containing components derived from natural, i.e. non-synthetic sources, and free of genetically modified organisms, may be used for organic farming in compliance with EU Regulation 2092/91, for example fertilisers as described in Example 2, 3 and 4, when using an activated charcoal allowable according to EU Regulation 2092/91, e.g. Acticarbone S as available from Ceca/Atofina, France.
The compositions of the invention provide a significant reduction of the unpleasant odour when compared to conventional organic fertiliser compositions derived from fermentation processes. Thus, the compositions described herein exhibit a reduction of odour of more than 90% when compared to hitherto known BIOSOL compositions when measured by olfactometry.
The compositions of the invention are therefore substantially odourless when dry or in use, e.g. when moist after rain showers or irrigation.
In use, the compositions of the invention may be administered in combination with for example a fungicide, a herbicide or an insecticide.
The substantially odourless fertilisers as herein described are suitable for use in domestic, household and leisure environments, for example in the home, on balconies, in gardens, on golf courses, parks, sports facilities, and in residential landscaping, as well as in agricultural areas in densely populated or tourist regions.

**Claims**

1.  A composition of a substantially odourless fertiliser which comprises:

    a) biomass derived from biotechnological fermentation processes from microorganisms,
    b) a mineral component comprising at least one basic magnesium compound, or at least one basic calcium compound or a mixture thereof,
    c) potassium magnesium sulphate, and
    d) activated charcoal.

2.  A composition as claimed in claim 1, which further comprises an organic component (e) having odour-reducing activity and optionally fertilising properties.

3.  A composition as claimed in claim 1 or 2 wherein the biomass (component a) comprises fungal biomass (mycelia).

4.  A composition as claimed in any preceding claim, wherein the biomass comprises biomass derived from the fermentation of *Acremonium spp.*, *Aspergillus spp.*, *Aureobasidium spp.*, *Beauveria spp.*, *Clitopilus spp.*, *Mucor spp.*, *Neocosmospera spp.*, *Phaecilomyces spp.*, *Penicillium spp., Phanerochaete spp., Pullularia spp.*, *Schizosaccharomyces spp., Tolypocladium spp., Trametes spp.,* or *Trichoderma spp..*

5.  A composition as claimed in claim 4 wherein the composition comprises a mixture of biomasses of more than one fungal microorganism.

6.  A composition as claimed in claim 4 or 5 wherein the composition comprises a mixture of biomasses derived from the fermentation of *Penicillium chrysogenum* and *Acremonium chrysogenum.*

7.  A composition as claimed in any preceding claim wherein the mineral component (b) comprises lime, limestone, dolomitic limestone, blast furnace lime, chalk, dolomite; or magnesite, magnesium oxide, or a mixture thereof; or rock meal.

8.  A composition as claimed in claim 7 wherein lime, or limestone, or dolomitic limestone comprise substantial proportions of a calcium compound.

9.  A composition as claimed in claim 7, wherein the mineral component b) comprises a mixture of magnesite and magnesium oxide in a ratio of 40 : 60 to 60 : 40, by weight.

10. A composition as claimed in any of claims 2 to 9 wherein the organic component (e) having odour-reducing activity and optionally fertilising properties comprises a natural residual product from vegetable oil production, or a vegetable oil, or a mixture thereof.

11. A composition as claimed in claim 10 wherein the organic component (e) comprises rape cake, optionally free or substantially free of genetically modified organisms.

12. A composition as claimed in any preceding claim wherein:

    component a) is dried fungal biomass (mycelia) in an amount of 72 - 90 % w/w, component b) is lime, or limestone, or dolomitic limestone in an amount of 5 - 20 % w/w,
    component c) is potassium magnesium sulphate in an amount of 2 - 5 % w/w, and
    component d) is activated charcoal in an amount of 0.5 - 3% w/w,

    wherein the respective weights are based on the total weight of the composition.

13. A composition as claimed in claim 12, wherein component b) comprises blast furnace lime, or chalk, or dolomite, or rock meal.

14. A composition as claimed in any of claims 1 to 11 wherein:

    component a) is dried fungal biomass (mycelia) in an amount of 77 - 90 % w/w, component b) is magnesite, or a mixture of magnesite and magnesium oxide in an amount of 5 - 15 % w/w,
component c) is potassium magnesium sulphate in an amount of 2 - 5 % w/w, and
component d) is activated charcoal in an amount of 0.5 - 3% w/w,

wherein the respective weights are based on the total weight of the composition.

15. A composition as claimed in any of claims 1 to 11 wherein:

component a) is dried fungal biomass (mycelia) in an amount of 32 - 70 % w/w, component b) is lime, or limestone, or dolomitic limestone, or blast furnace lime, or chalk, or dolomite, or rock meal, or magnesite, or a mixture of magnesite and
magnesium oxide in an amount of 5 - 15 % w/w,
component c) is potassium magnesium sulphate in an amount of 2 - 5 % w/w, component d) is activated charcoal in an amount of 0.5 - 3% w/w,

and which further comprises component e) where e) is rape cake in an amount of 15 - 45 % w/w,
wherein the respective weights are based on the total weight of the composition.

16. A process for the production of a composition of a substantially odourless fertiliser of any preceding claim, comprising the steps of

(i) mixing components a) to d), and optionally e), and subsequently
(ii) pelletising by extrusion and thereafter crumbling the mixture obtained in step (i); or alternatively
(iii) granulating the mixture obtained in step (i), and subsequently
(iv) sieving the product obtained in step (ii) or (iii),

wherein the pelletisation process (ii) or the granulation process (iii) takes place in the presence of a solvent medium.

17. A process as claimed in claim 16, wherein the solvent medium is aqueous, preferably water.

18. A process as claimed in claims 16 or 17, wherein the pelletisation process (ii) or the granulation process (iii) takes place in the presence of steam and 1 - 2% water by weight related to the mixture obtained in step (i).

**European Patent Office**

## EUROPEAN SEARCH REPORT

Application Number

EP 04 01 2461

### DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | DATABASE WPI<br>Section Ch, Week 199647<br>Derwent Publications Ltd., London, GB;<br>Class D15, AN 1996-474982<br>XP002289142<br>& KR 9 501 404 B1 (KIM D)<br>18 February 1995 (1995-02-18)<br>* abstract * | 1-3,5,<br>7-9 | C05F5/00<br>C05D1/02<br>C05D3/02<br>C05D5/00 |
| A | EP 0 341 736 A (BIOCHEMIE GMBH)<br>15 November 1989 (1989-11-15)<br>* claims *<br>* page 3, line 35 – page 4, line 27 * | 1-18 | |
| A | PATENT ABSTRACTS OF JAPAN<br>vol. 1998, no. 11,<br>30 September 1998 (1998-09-30)<br>& JP 10 167866 A (FUNAGAYAMA YASUAKI),<br>23 June 1998 (1998-06-23)<br>* abstract * | 1-18 | |
| A | DATABASE WPI<br>Section Ch, Week 197627<br>Derwent Publications Ltd., London, GB;<br>Class C04, AN 1976-50857X<br>XP002289143<br>& JP 51 057557 A (TANAKA T)<br>20 May 1976 (1976-05-20)<br>* abstract * | 1-18 | **TECHNICAL FIELDS SEARCHED (Int.Cl.7)**<br>C05F<br>C05D |
| A | DATABASE WPI<br>Section Ch, Week 200364<br>Derwent Publications Ltd., London, GB;<br>Class C04, AN 2003-677432<br>XP002289144<br>& RU 2 192 403 C2 (AS SIBE IRKUT CHEM INST) 10 November 2002 (2002-11-10)<br>* abstract * | 1-18 | |

-/--

The present search report has been drawn up for all claims

| Place of search | Date of completion of the search | Examiner |
|---|---|---|
| The Hague | 21 July 2004 | RODRIGUEZ FONTAO, M |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons

& : member of the same patent family, corresponding
   document

EPO FORM 1503 03.82 (P04C01)

**European Patent Office**

## EUROPEAN SEARCH REPORT

Application Number

EP 04 01 2461

### DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| A | GB 800 935 A (ROBERT ALEXANDER GRIGOR YOUNG) 3 September 1958 (1958-09-03) * claims 1,3,5,8 * * page 1, line 8 - line 72 * | 1-18 | |
| A | WO 00/64837 A (LOVOCHEMIE A S) 2 November 2000 (2000-11-02) * claims * | 1-18 | |
| A | US 5 620 498 A (EBERT HILDEGARD ET AL) 15 April 1997 (1997-04-15) * the whole document * | 1-18 | |

TECHNICAL FIELDS
SEARCHED (Int.Cl.7)

The present search report has been drawn up for all claims

| Place of search | Date of completion of the search | Examiner |
|---|---|---|
| The Hague | 21 July 2004 | RODRIGUEZ FONTAO, M |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

EP 1 481 956 A1

## ANNEX TO THE EUROPEAN SEARCH REPORT
## ON EUROPEAN PATENT APPLICATION NO.

EP 04 01 2461

This annex lists the patent family members relating to the patent documents cited in the above-mentioned European search report.
The members are as contained in the European Patent Office EDP file on
The European Patent Office is in no way liable for these particulars which are merely given for the purpose of information.

21-07-2004

| Patent document cited in search report | | Publication date | Patent family member(s) | | Publication date |
|---|---|---|---|---|---|
| KR 9501404 | B1 | 18-02-1995 | NONE | | |
| EP 0341736 | A | 15-11-1989 | AT | 392268 B | 25-02-1991 |
| | | | AT | 125288 A | 15-08-1990 |
| | | | EP | 0341736 A1 | 15-11-1989 |
| | | | FI | 892294 A | 14-11-1989 |
| | | | NO | 891918 A | 14-11-1989 |
| JP 10167866 | A | 23-06-1998 | NONE | | |
| JP 51057557 | A | 20-05-1976 | NONE | | |
| RU 2192403 | C2 | 10-11-2002 | NONE | | |
| GB 800935 | A | 03-09-1958 | NONE | | |
| WO 0064837 | A | 02-11-2000 | CZ | 9901488 A3 | 13-12-2000 |
| | | | WO | 0064837 A1 | 02-11-2000 |
| | | | DE | 10081070 D2 | 28-03-2002 |
| | | | SK | 15482001 A3 | 04-03-2003 |
| US 5620498 | A | 15-04-1997 | DE | 4138883 C1 | 27-05-1993 |
| | | | AT | 144238 T | 15-11-1996 |
| | | | CA | 2083893 A1 | 28-05-1993 |
| | | | CN | 1072672 A ,B | 02-06-1993 |
| | | | CZ | 9203486 A3 | 16-06-1993 |
| | | | DE | 59207378 D1 | 21-11-1996 |
| | | | DK | 545199 T3 | 24-03-1997 |
| | | | EP | 0545199 A1 | 09-06-1993 |
| | | | ES | 2094267 T3 | 16-01-1997 |
| | | | JP | 5230458 A | 07-09-1993 |